(19) **Europäisches Patentamt**
**European Patent Office**
**Office européen des brevets**

(11) **EP 3 571 886 B1**

(12) **EUROPEAN PATENT SPECIFICATION**

(45) Date of publication and mention
of the grant of the patent:
**21.04.2021 Bulletin 2021/16**

(51) Int Cl.:
***H04W 72/08*** *(2009.01)*   ***H04L 5/00*** *(2006.01)*
***H04W 76/14*** *(2018.01)*

(21) Application number: **17707796.3**

(22) Date of filing: **23.02.2017**

(86) International application number:
**PCT/EP2017/054122**

(87) International publication number:
**WO 2018/153451 (30.08.2018 Gazette 2018/35)**

(54) **WIRELESS COMMUNICATION DEVICES AND METHODS FOR SIDELINK INTERFERENCE COORDINATION IN A WIRELESS COMMUNICATION NETWORK**

KABELLOSES KOMMUNIKATIONSGERÄT UND VERFAHREN FÜR SIDELINK INTERFERENZ KOORDINATION IN EINEM KABELLOSEN KOMMUNIKATIONSNETZ

APPAREIL DE COMMUNICATION SANS FIL ET PROCÉDÉ POUR COORDINATION D'INTERFÉRENCE POUR SIDELINK DANS UN RÉSEAU DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.11.2019 Bulletin 2019/48**

(73) Proprietor: **Huawei Technologies Co., Ltd.**
**Longgang District**
**Shenzhen, Guangdong 518129 (CN)**

(72) Inventors:
• **MEDINA, Daniel**
**80992 Munich (DE)**
• **AYAZ, Serkan**
**80992 Munich (DE)**

(74) Representative: **Gill Jennings & Every LLP**
**MXL**
**The Broadgate Tower**
**20 Primrose Street**
**London EC2A 2ES (GB)**

(56) References cited:
**WO-A1-2017/026977**

• **LG ELECTRONICS: "Discussion on V2X RRM requirement", 3GPP DRAFT; R4-1700852 V2X RRM REQUIREMENT_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Athens, Greece; 20170213 - 20170217 12 February 2017 (2017-02-12), XP051213976, Retrieved from the Internet: URL:http://www.3gpp.org/ftp/Meetings_3GPP_ SYNC/RAN4/Docs/ [retrieved on 2017-02-12]**

**Description**

TECHNICAL FIELD

The present invention relates to wireless communications. More specifically, the present invention relates to wireless communication devices and methods for communication in a communication network, in particular, a Vehicle-to-Vehicle (V2V) communication network.

BACKGROUND

The 3rd Generation Partnership Project (3GPP) is in the process of enhancing Long Term Evolution (LTE) specifications toward 5G for supporting V2X (Vehicle-to-Everything) services.

In a V2V, or more generally, a V2X communication network, information can be exchanged among User Equipments (UEs), e.g., vehicles, either via the LTE-Uu interface by means of a base station (i.e., uplink/downlink), or directly Device-to-Device (D2D) via the PC5 interface (i.e., sidelink (SL)). The direct communication mode is supported when the UE is served by E-UTRAN and when the UE is outside of E-UTRA coverage (see 3GPP TS 36.300, "Evolved Universal Terrestrial Radio Access (E-UTRA) and Evolved Universal Terrestrial Radio Access Network (E-UTRAN); Overall description; Stage 2 (Release 14)", September 2016, V14.0.0). In particular, there are two sidelink transmission modes (see 3GPP TS 36.213, "Evolved Universal Terrestrial Radio Access (E-UTRA); Physical layer procedures (Release 14)", September 2016, V14.0.0). In the scheduled mode (SL transmission modes 1 and 3), the operator acts as a centralized coordinator for sidelink resource allocation for direct transmission over the PC5 interface, while, in autonomous mode (SL transmission modes 2 and 4), the UEs autonomously select sidelink resources from (pre)configured resource pools for direct transmission over the PC5 interface.

In V2X sidelink communication, the problem of sidelink resource allocation (or sidelink scheduling) has to be addressed, i.e., how to schedule radio transmissions in the communication network with minimal interference.

In order to prevent mutual interference among Physical Sidelink Shared Channel (PSSCH) transmissions which use the same carrier frequency in a given cell, different terminals (UEs) can be scheduled to transmit at different times (i.e., different subframes) and/or on different subchannels (i.e., different resource blocks). However, in order to increase the system capacity as well as to reduce channel access delay, it is desirable to allow multiple transmissions within the same time-frequency resource (subframe and subchannel), as long as their mutual interference is guaranteed to be negligible.

In particular, the requirement for low interference (as well as for low access delay) is very important for the provision of services which require Ultra-Reliable Low-Latency Communications (URLLC), such as V2V services for cooperative autonomous driving (e.g., cooperative sensing or cooperative maneuvers).

In order to proactively determine whether the mutual interference among multiple PSSCH transmissions may be negligible, before such transmissions are allowed to use the same time-frequency resource, or equivalently, in order to ensure a high Signal-to-Interference-plus-Noise Ratio (SINR), current solutions exploit the knowledge of the UE's geographic location (e.g., obtained via GPS and reported periodically by the UE to the network). The reuse of a time-frequency resource is then possible whenever terminals are sufficiently far apart. This is equivalent to imposing a minimum reuse distance.

However, such location-based reuse strategies have the disadvantage that they do not take into account the actual physical propagation of waves (i.e., the wireless channel). For example, whereas two vehicles on the highway may need to be ~1 km away to transmit on the same resource with negligible interference, the situation may be very different in an urban environment where buildings shield most of the interference between nearby streets. Furthermore, location-based reuse does not take advantage of directional antennas, which may be deployed in future vehicles.

As a result, such approaches may only be able to satisfy the high SINR requirements by reusing resources in a rather conservative way, namely by allowing transmissions to use the same radio resource only if the UEs are located very far away. This leads to lower spectral efficiency of the cellular system. Another disadvantage of location-based reuse is that it requires a centralized entity that collects the positions of all UEs within a certain area (such as a cell). Thus, it is not applicable when out of coverage.

For out-of-coverage operation, the current 3GPP specifications for V2X sidelink communication specify a UE autonomous resource selection procedure which excludes certain resources based on sensing the wireless channel, in particular through the introduction of two key measurements: PSSCH-RSRP (PSSCH Reference Signal Received Power) and S-RSSI (Sidelink Received Signal Strength Indicator). However, sensing is performed at the transmitter, not the receiver, leading to the well-known hidden terminal problem. Moreover, the resource selection procedure does not take into account the impact of the eventual transmission on nearby receivers.

Thus, there is a need for improved wireless communication devices and methods for communication in a wireless communication network, in particular in a V2V communication network.

WO 2017/026977 A1 describes an electronic device for device-to-device (D2D) communication that comprises receive circuitry to receive an indication of D2D resources for D2D communication, and processing circuitry to evaluate a time and frequency selective measurement of one or more of the D2D resources, based on the indication. The measurement includes one or more of sidelink reference signal received power, sidelink received signal strength indicator and other indicators. The measurement may be reported to an eNodeB from which the indication was received. The eNodeB may use the reported measurement to make a decision on a transmission path selection or a time pattern for sidelink transmission.

3GPP Tdoc R4-1700852, "Discussion on V2X RRM requirement", describes a UE capable of performing PSSCH-RSRP measurements and S-RSSI measurements on a carrier operating V2X sidelink communication for determining a subset of resources to be excluded in PSSCH resource selection in sidelink transmission mode 4.

## SUMMARY

It is an objective of the invention to provide for improved wireless communication devices and methods for communication in a wireless communication network, in particular in a V2V communication network.

The foregoing and other objectives are achieved by the subject matter of the independent claims. Further implementation forms are apparent from the dependent claims.

The invention can be implemented in hardware and/or software.

## BRIEF DESCRIPTION OF THE DRAWINGS

Further embodiments of the invention will be described with respect to the following figures, wherein:

Fig. 1 shows a schematic diagram of a wireless communication network comprising two wireless communication devices according to an embodiment and a network entity according to an embodiment;

Fig. 2 shows a schematic diagram illustrating an example of a Physical Sidelink Shared Channel (PSSCH) superframe for communication in a wireless communication network according to an embodiment;

Fig. 3 shows a schematic diagram illustrating an exemplary set $\mathcal{N}_j$ of neighboring wireless communication devices of a wireless communication device $j$ in a wireless communication network, and threshold values $P_m$, according to an embodiment;

Fig. 4 shows a schematic diagram illustrating an exemplary first map $S_j$ and an exemplary second map $C_j$ computed by a wireless communication device $j$ according to an embodiment;

Fig. 5 shows a logical flow diagram of a method for communication in a wireless communication network according to an embodiment;

Fig. 6 shows a logical flow diagram of a method for communication in a wireless communication network according to an embodiment; and

Fig. 7 shows a logical flow diagram of a method for communication in a wireless communication network according to an embodiment.

In the various figures, identical reference signs will be used for identical or at least functionally equivalent features.

## DETAILED DESCRIPTION OF EMBODIMENTS

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

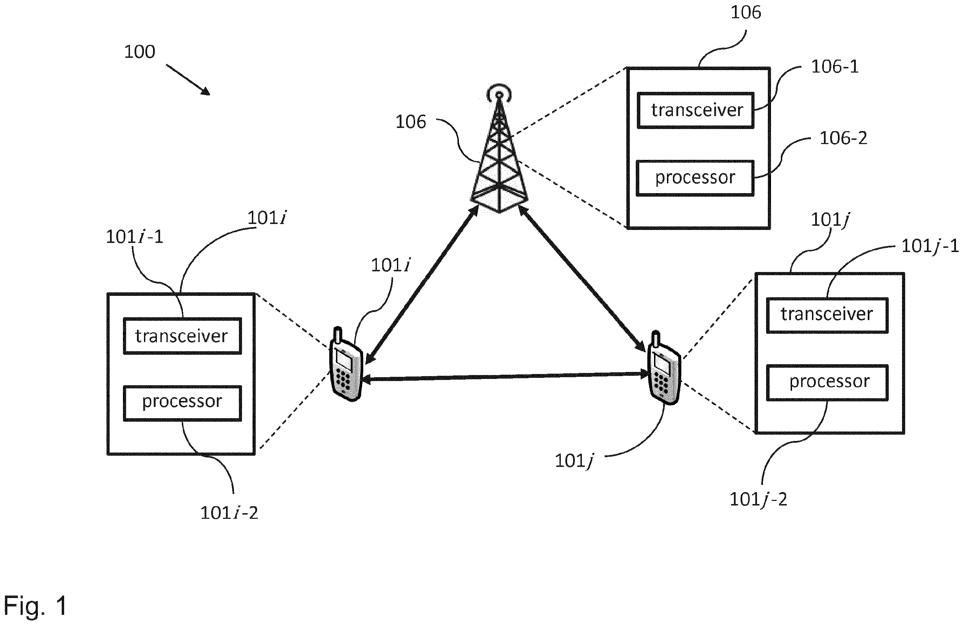

Figure 1 shows a schematic diagram of a wireless communication network 100 comprising two wireless communication devices 101 $i$ and 101 $j$ according to an embodiment, and a network entity 106 according to an embodiment.

In an embodiment, the wireless communication network 100 is a mobile or cellular communication network.

In an embodiment, the network entity 106 is a base station, and the wireless communication devices 101 $i$ and 101 $j$ are User Equipments (UEs), in particular communication units of a vehicle. For the sake of clarity, the wireless communication devices 101$i$ and 101$j$ will also be referred to simply as wireless communication devices $i$ and $j$.

In the invention, the wireless communication device 101$j$ comprises a transceiver 101$j$-1 configured to measure a first signal strength parameter ($P_{ij}$), which is a Physical Sidelink Shared Channel (PSSCH) Reference Signal Received Power (RSRP), associated with at least one neighboring wireless communication device 101i, and measure a second signal strength parameter ($I_j(s)$), which is a Sidelink Received Signal Strength Indicator (SRSSI), associated with at least one of the plurality of sidelink radio resources (s). Moreover, the wireless communication device 101j comprises a processor 101j-2 configured to determine an interference-related parameter ($H_j(s)$), which is a PSSCH Interference Headroom, associated with at least one of the plurality of sidelink radio resources (s), compute a first map ($S_j$) mapping an identity-related parameter ($ID_i$) of the at least one neighboring wireless communication device 101i to $P_{ij}$ or a function of $P_{ij}$, and compute a second map ($C_j$) mapping at least one sidelink radio resource (s) to $I_j(s)$ or $H_j(s)$ or a function of $I_j(s)$ or a function of $H_j(s)$. Furthermore, the transceiver 101j-1 is configured to transmit $S_j$ and $C_j$ to a network entity 106 in articular a base station and to at least one neighboring wireless communication device. The transceiver (101j-1) is further configured to transmit to the at least one neighboring wireless communication device (101i) a set ("T" J) of transmitting sidelink radio resources and a set ("R" J) of receiving sidelink radio resources of the wireless communication device (101j).

In the invention, the wireless communication device 101i comprises a transceiver 101i-1 configured to receive, via the wireless communication channel, from the neighboring wireless communication device 101j, the first map ($S_j$) mapping the identity-related parameter ($ID_i$) of the wireless communication device 101i to the first signal strength parameter ($P_{ij}$), which is a Physical Sidelink Shared Channel (PSSCH) Reference Signal Received Power (RSRP), or a function of $P_{ij}$, and the second map ($C_j$) mapping at least one sidelink radio resource (s) to the second signal strength parameter ($I_j(s)$), which is a Sidelink Received Signal Strength Indicator (S-RSSI), or the interference-related parameter ($H_j(s)$), which is a PSSCH Interference Headroom, or a function of $H_j(s)$. Moreover, in the invention the transceiver 101i-1 of the wireless communication device 101i is configured to receive, from the neighboring wireless communication device 101j, a set ($\mathcal{T}_j$) of transmitting sidelink radio resources and a set ($\mathcal{R}_j$) of receiving sidelink radio resources of the wireless communication device 101j. Furthermore, the wireless communication device 101i comprises a processor 101i-2 configured to select one or more sidelink radio resources (s) from the plurality of sidelink radio resources for communicating with the neighboring wireless communication device 101j, or with another wireless communication device (l), on the basis of a comparison between $S_j(i)$ and $C_j(s)$.

In the invention, the network entity 106 is a base station which supports a plurality of sidelink radio resources. Moreover, the network entity 106 comprises a transceiver 106-1 configured to receive, from the wireless communication device 101j, the first map ($S_j$) mapping an identity-related parameter ($ID_i$) of the wireless communication device 101i to the first signal strength parameter ($P_{ij}$), which is a Physical Sidelink Shared Channel (PSSCH) Reference Signal Received Power (RSRP), or a function of $P_{ij}$, and the second map ($C_j$) mapping at least one sidelink radio resource (s) to the second signal strength parameter ($I_j(s)$), which is a Sidelink Received Signal Strength Indicator (S-RSSI), or the interference-related parameter ($H_j(s)$), which is a PSSCH Interference Headroom, or a function of $H_j(s)$.

Moreover, the network entity 106 comprises in the invention a processor 106-2 configured to select one or more sidelink radio resources (s) from the plurality of sidelink radio resources for communication between the wireless communication device 101 i and the wireless communication device 101j, or another wireless communication device (l), in particular on the basis of a comparison between $S_j(i)$ and $C_j(s)$.

For example, the processor 106-2 of the network entity 106, when considering candidate resources (s) for transmission from wireless communication device 101i to at least one neighboring wireless communication device 101j, is configured to exclude (i.e., to not allocate) those resources (s) for which either $S_j(i) < C_j(s)$ (or, equivalently, $P_{ij} < \gamma I_j(s)$) for any receiving wireless communication device 101 j, namely, the wireless communication device 101i is too "far" (in terms of RF power) from at least one receiving wireless communication device 101j to achieve a predetermined target SINR y, or $S_j(i) > C_j(s)$ (or, equivalently, $P_{il} > H_j(s)$) for any other neighboring wireless communication device (l) already receiving in resource s, namely, the wireless communication device 101i is too "close" (in terms of RF power) to at least one other neighboring wireless communication device (l) already receiving in resource s.

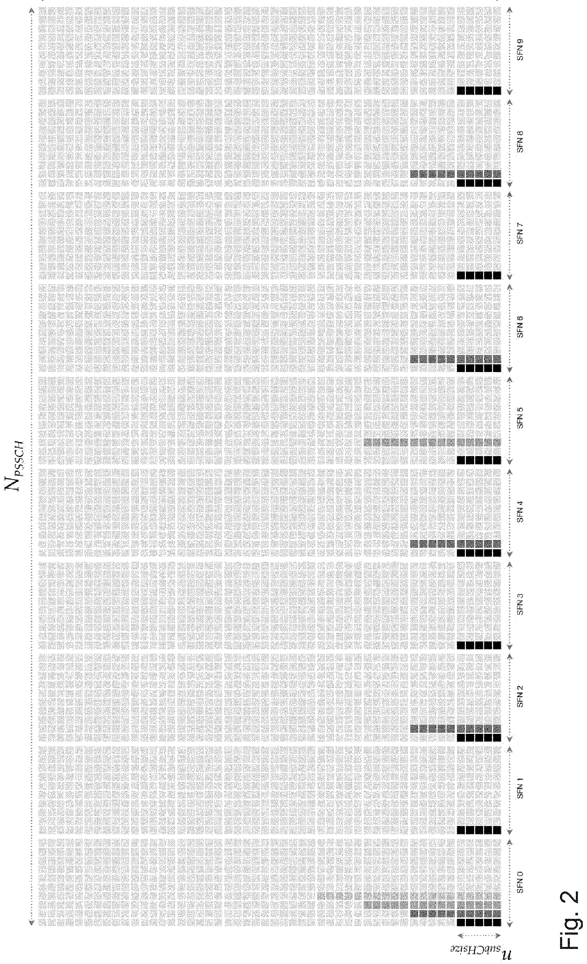

In embodiments of the invention, in the scheduled mode, which will be described in more detail in the context of figure 2, the Sidelink Shared Channel (SL-SCH) scheduler is located in the base station 106 (or any other network entity responsible for granting the rights to transmit on PSSCH), and in the autonomous mode, the SL-SCH scheduler is located in the wireless communication device 101i.

In embodiments of the invention, the plurality of sidelink radio sources are arranged in a Physical Sidelink Shared Channel (PSSCH) superframe, and comprise the set of transmitting resources $\mathcal{T}_j$, i.e., a set of resources via which the wireless communication device 101j is scheduled to transmit within each PSSCH superframe, and the set of receiving resources $\mathcal{R}_j$, i.e., a set of resources via which the wireless communication device 101j is scheduled to receive within each PSSCH superframe, as it will be better elucidated in the description of figure 2.

In embodiments of the invention, the identity-

related parameter $ID_i$ of the at least one neighboring wireless communication device 101i is indicated, in particular, by a resource indication value corresponding to the location, in time and/or frequency, of a recent transmission from wireless communication device 101i to wireless communication device 101j, or a function thereof.

In embodiments of the invention, the first signal strength parameter $P_{ij}$ [W] is defined as PSSCH Reference Signal Received Power (PSSCH-RSRP) in 3GPP TS 36.214, "Evolved Universal Terrestrial Radio Access (E-UTRA); Physical layer; Measurements (Release 14)", September 2016, V14.0.0. For example, in case the wireless communication device 101j is a communication unit of a vehicle, the first signal strength parameter $P_{ij}$ can be obtained by measuring the received power of PSSCH Demodulation Reference Signals (DMRS) associated with periodic Cooperative Awareness Message (CAM) or Basic Safety Message (BSM) transmissions occurring, e.g., every 100 ms.

In an embodiment, for each resource $s \in \mathcal{R}_j$ within the PSSCH superframe, the PSSCH Interference Headroom $H_j(s)$ [W] is defined as the maximum additional interference beyond which a target SINR y would no longer be satisfied for the wireless communication device 101j receiving in resource s. In an embodiment, $y$ is a parameter configurable by the wireless communication network 100, which denotes the minimum SINR that should be guaranteed at any receiving wireless communication device.

In an embodiment of the invention, the second signal strength parameter $I_j(s)$ [W] is defined as Sidelink Received Signal Strength Indicator (S-RSSI) in 3GPP TS 36.214, "Evolved Universal Terrestrial Radio Access (E-UTRA); Physical layer; Measurements (Release 14)", September 2016, V14.0.0, wherein for each resource $s \notin \mathcal{R}_j$ within the PSSCH superframe (excluding subframes in which the wireless communication device 101j is scheduled to transmit), the second signal strength parameter $I_j(s)$ is the observed power (including thermal noise power) in resource s.

Figure 2 shows an example of a Physical Sidelink Shared Channel (PSSCH) superframe for communication in the wireless communication network 100 according to an embodiment.

In this example, a repeating (i.e., periodic) PSSCH transmit schedule for V2X sidelink communication is shown, which is referred to as PSSCH superframe. More specifically, figure 2 shows an example of a PSSCH superframe for a typical V2X traffic scenario, with a repeating pattern of length $N_{PSSCH}$ = 100 subframes (100 ms) and different traffic types with periodicities of 10, 20, 50 and 100 subframes. The sidelink system bandwidth consisting of $N_{RB}^{SL} = 50$ Physical Resource Blocks (PRBs) is divided into $N_{subCH} = N_{RB}^{SL} / n_{subCHsize}$ subchannels. The subchannel size $n_{subCHsize}$ defines the granularity used for PSSCH resource allocation. A subchannel consists of $n_{subCHsize}$ contiguous PRBs. The k-th subchannel consists of PRBs $k\, n_{subCHsize}$ to $(k + 1) n_{subCHsize}$ - 1, with k = 0, ... , $N_{subCH}$ - 1.

For the purpose of PSSCH resource allocation, a radio resource s is defined as a subframe/subchannel pair $(t(s), f(s))$, corresponding to a specific subframe t(s), with $0 \le t(s) < N_{PSSCH}$, and a specific subchannel $f(s)$, with $0 \le f(s) < N_{subCH}$, within each repeating PSSCH superframe of size $N_{PSSCH} \times N_{subCH}$.

In embodiments of the invention, the communication between the wireless communication devices in the wireless communication network 100 is periodic. This has the advantage that recent physical (PHY) layer measurements (e.g., S-RSSI in a given resource) can be used for allocating PSSCH resources in such a way that SINR requirements are satisfied.

Moreover, in order to prevent collisions on the Physical Sidelink Shared Channel (PSSCH) (i.e., the physical channel carrying the Sidelink Shared Channel (SL-SCH)), the following two MAC (Medium Access Control) constraints are taken into account when allocating sidelink resources:

(a) a wireless communication device cannot both transmit and receive in the same subframe (commonly known as half-duplex constraint), as it would interfere with itself.
This is due to the fact that every wireless communication device transmits PSSCH on the same carrier frequency within a given cell;

(b) the mutual interference among different PSSCH transmissions occurring in any given resource should be kept within acceptable levels.

In the scheduled mode, the half-duplex constraint (a) is straightforward to satisfy, since the SL-SCH scheduler at the base station (or any other network entity, e.g., the network entity 106, responsible for granting the rights to transmit on PSSCH) knows which wireless communication devices are transmitting/receiving in any given resource.

In order to satisfy (a) in autonomous mode, every wireless communication device, e.g., the wireless communication device 101j, periodically broadcast its PSSCH schedule (i.e., resources in which it is scheduled to transmit/receive), so that the neighboring wireless communication devices can select resources in which the wireless communication device 101j is not transmitting or receiving.

In order to satisfy the interference constraint (b), each wireless communication device, e.g., the wireless communication device 101j, transmits information to the network entity 106 (scheduled mode) and/or to its neighboring wireless communication devices (autonomous mode) about which wireless communication devices are in the "proximity" (in terms of RF power) of the wireless communication device 101$j$ and how "close" (in terms of RF power) they are to the wireless communication device 101$j$. Moreover, for each resource in which the wireless communication device 101$j$ is scheduled to receive, the transceiver 101$j$-1 of the wireless communication device 101$j$ can be configured to transmit information about how "close" (in terms of RF power) a neighboring wireless communication device can be allowed to transmit without degrading reception at the wireless communication device 101$j$, and, for each other resource, how "far" (in terms of RF power) a wireless communication device can be and still be able to reliably communicate with the wireless communication device 101$j$.

In scheduled mode, the wireless communication device 101$j$ periodically reports the aforementioned information to the network entity 106, while, in autonomous mode, the wireless communication device 101 $j$ periodically broadcasts the aforementioned information to its neighboring wireless communication devices.

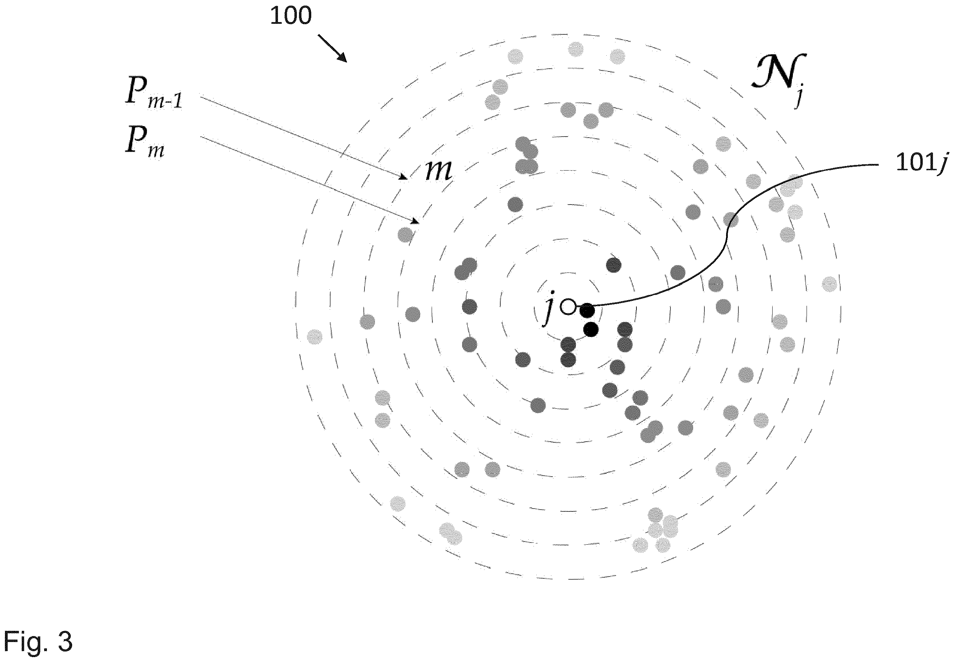

Figure 3 shows a schematic diagram illustrating an exemplary set $\mathcal{N}_j$ of neighboring wireless communication devices of a wireless communication device $j$ in the wireless communication network 100, and threshold values $P_m$, according to an embodiment.

The plurality of neighboring wireless communication devices comprise the wireless communication device 101$j$. The processor 101$j$-2 of the wireless communication device 101$j$ can be configured to perform the following steps:

1st step: determining the set $\mathcal{N}_j$ comprising identity-related parameters $ID_i$ of neighboring wireless communication devices, e.g., of the wireless communication device 101$i$, satisfying the condition $P_{ij} > \gamma_c$, with $\gamma_c$ being a parameter configurable by the wireless communication network 100;

2nd step: mapping, by means of the first map $S_j$, the identity-related parameter $ID_i$ of each neighboring wireless communication device $i$, $i \in \mathcal{N}_j$, or a subset thereof, to the measured RSRP value $P_{ij}$ (indicated by setting $S_j(i) = P_{ij}$), or to one of $n_s$ RSRP value ranges, specified by a set of predetermined threshold values $P_m$, $0 \leq m \leq n_s$, with $P_{m-1} < P_m$. In particular, a neighboring wireless communication device 101$i$ is mapped to RSRP value range m (indicated by setting $S_j(i) = m$) if and only if

$$P_{m-1} < P_{ij} < P_m.$$

3rd step: mapping, by means of the second map $C_j$, each resource s within the PSSCH superframe (excluding subframes in which the wireless communication device 101$j$ is scheduled to transmit), or a subset thereof, to a value $C_j(s)$ as follows:

- if $s \in \mathcal{R}_j$, $C_j(s)$ is set to $H_j(s)$ or to the highest index m for which $P_m < H_j(s)$

- if $s \notin \mathcal{R}_j$, $C_j(s)$ is set to $\mathcal{H}_j(s)$ or to the lowest index m for which $P_{m-1} > \mathcal{H}_j(s)$, where y is the minimum SINR that should be guaranteed for the communication link.

The wireless communication device 101$j$ periodically (e.g., every 100 ms) reports to the network entity 106 (scheduled mode), or broadcasts to its neighboring wireless communication devices (autonomous mode), the first map $S_j$ and the second map $C_j$.

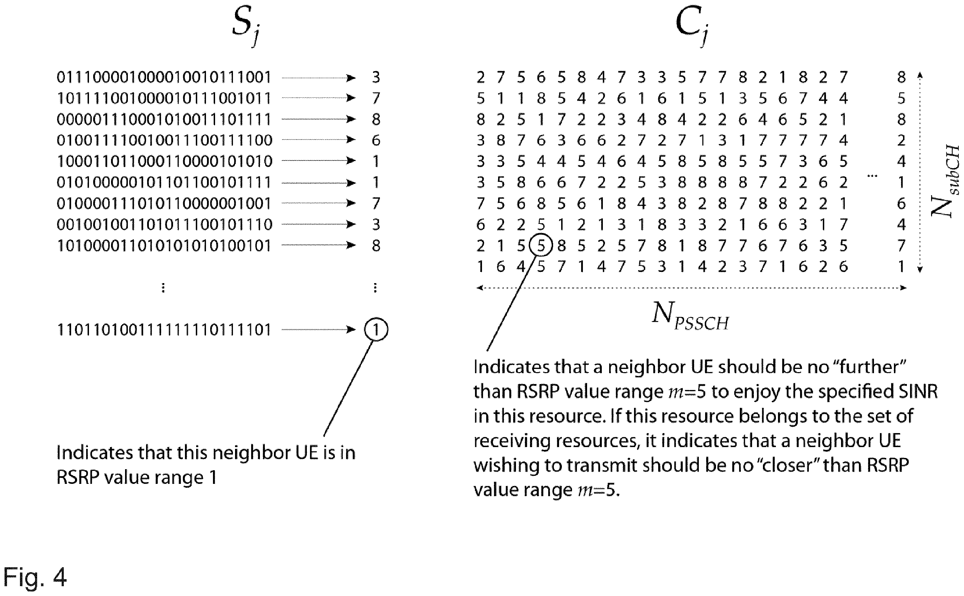

An example of the first map $S_j$ and the second map $C_j$ of the wireless communication device 101$j$ according to embodiments of the invention is shown in figure 4.

In embodiments of the invention, in the autonomous mode, the broadcast comprises also the PSSCH schedule (i.e., the set of transmitting resources $\mathcal{T}_j$ and the set of receiving resources $\mathcal{R}_j$) of the wireless communication device 101$j$.

In order to minimize signaling overhead, the transceiver 101$j$-1 of the wireless communication device 101$j$ can be configured to only transmit the changes in the first map $S_j$ and in the second map $C_j$ relative to an earlier update. The full maps can be transmitted at a lower update rate (e.g., with every 10th update).

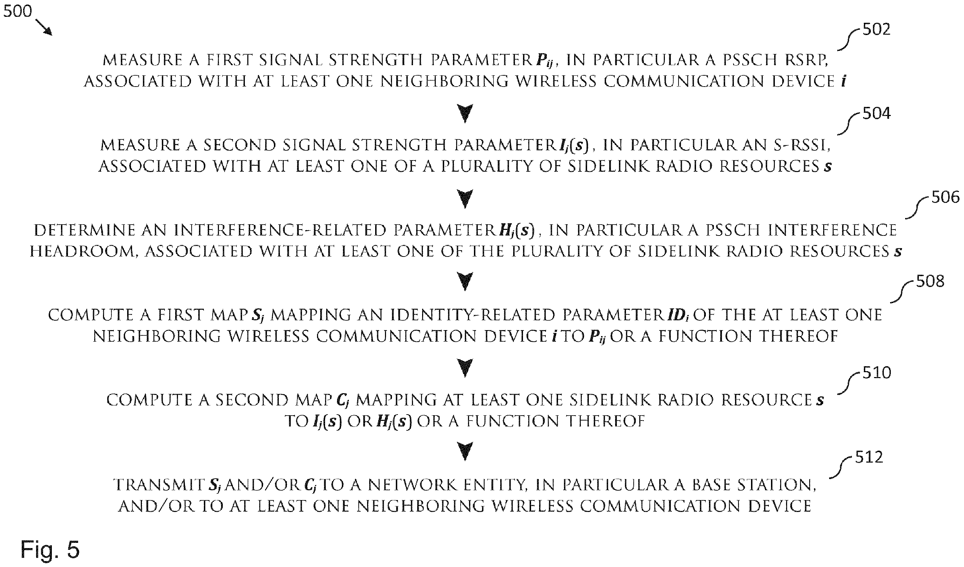

Figure 5 shows a logical flow diagram of a method 500 for communication in the wireless communication network 100 supporting a plurality of sidelink radio resources according to the invention.

The method 500 comprises the steps of measuring 502 a first signal strength parameter ($P_{ij}$), which is a Physical Sidelink Shared Channel (PSSCH) Reference Signal Received Power (RSRP), associated with at least one neighboring wireless communication device 101$i$, rand measuring 504 a second signal strength parameter ($I_j(s)$), which is a Sidelink Received Signal Strength Indicator (S-RSSI), associated with at least one of the plurality of sidelink radio resources (s), and determining 506 an interference-related parameter ($H_j(s)$), which is a PSSCH Interference Headroom, associated with at least one of the plurality of sidelink radio resources (s), computing 508 a first map ($S_j$) mapping an identity-related parameter ($ID_i$) of the at least one neighboring wireless communication device 101$i$ to $P_{ij}$ or a function of Pij, and computing 510 a second map ($C_j$) mapping at least one sidelink radio resource (s) to $I_j(s)$ or $H_j(s)$ or a function of $I_j(s)$ or a function of $H_j(s)$, and transmitting 512 $S_j$ and $C_j$

to a network entity 106, which is a base station, and to at least one neighboring wireless communication device.

The method 500 can be performed by the wireless communication device 101*j* described above. Further features of the method 500 result directly from the functionality of the wireless communication device 101*j* and its different embodiments.

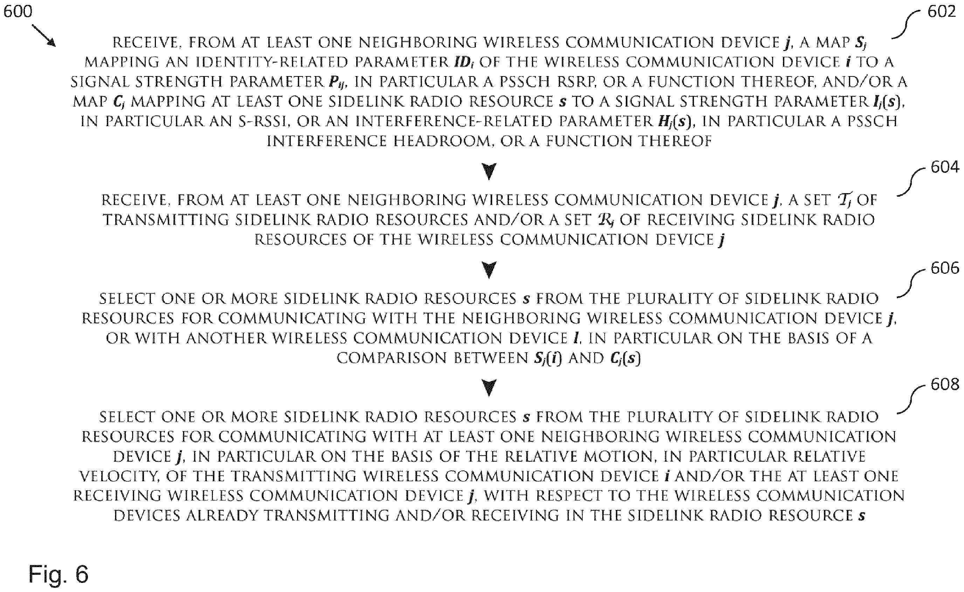

Figure 6 shows a logical flow diagram of a method 600 for communication in the wireless communication network 100 supporting a plurality of sidelink radio resources according to the invention.

The method 600 comprises the steps of receiving 602, from at least one neighboring wireless communication device 101*j*, a first map ($S_j$) mapping an identity-related parameter ($ID_i$) of the wireless communication device 101*i* to a first signal strength parameter ($P_{ij}$), which is a Physical Sidelink Shared Channel (PSSCH) Reference Signal Received Power (RSRP), or a function of Pij, and a second map ($C_j$) mapping at least one sidelink radio resource ($s$) to a second signal strength parameter ($I_j(s)$), which is a Sidelink Received Signal Strength Indicator (S-RSSI), or an interference-related parameter ($H_j(s)$), in particular a PSSCH Interference Headroom, or a function of $H_j(s)$, receiving 604, from the at least one neighboring wireless communication device 101*j*, a set

$(\mathcal{T}_i)$ of transmitting sidelink radio resources and a set

$(\mathcal{R}_j)$ of receiving sidelink radio resources of the wireless communication device 101*j*, selecting 606 one or more sidelink radio resources ($s$) from the plurality of sidelink radio resources for communicating with the neighboring wireless communication device 101*j*, or with another wireless communication device ($I$), on the basis of a comparison between $S_j(i)$ and $C_j(s)$. In an embodiment, further selecting 608 one or more sidelink radio resources ($s$) from the plurality of sidelink radio resources for communicating with at least one neighboring wireless communication device 101*j*, on the basis of the relative motion, which is relative velocity, of the transmitting wireless communication device 101*i* and/or the at least one receiving wireless communication device 101*j*, with respect to the wireless communication devices already transmitting and/or receiving in the sidelink radio resource (s). The relative motion, which is relative velocity, can be derived from the content of periodic CAM or BSM messages received by the wireless communication device 101*i* from neighboring wireless communication devices.

In the invention, the method 600 is performed by the wireless communication device 101*i* described above. Further features of the method 600 result directly from the functionality of the wireless communication device 101*i* and its different embodiments.

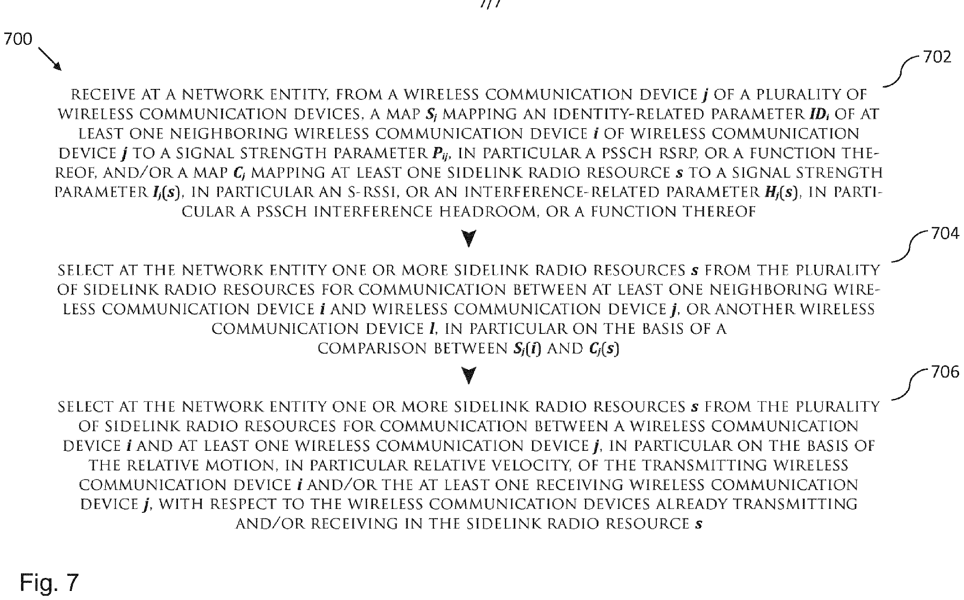

Figure 7 shows a logical flow diagram of a method 700 for communication in the wireless communication network 100 supporting a plurality of sidelink radio resources.

In the invention, the method 700 comprises the steps of receiving 702 at the network entity 106, from a wireless communication device 101*j* of the plurality of wireless communication devices, a first map ($S_j$) mapping an identity-related parameter ($ID_i$) of the at least one neighboring wireless communication device 101*i* of the wireless communication device 101*j* to a first signal strength parameter ($P_{ij}$), which is a Physical Sidelink Shared Channel (PSSCH) Reference Signal Received Power (RSRP), or a function of $P_{ij}$, and a second map ($C_j$) mapping at least one sidelink radio resource (s) to a second signal strength parameter ($I_j(s)$), which is a Sidelink Received Signal Strength Indicator (S-RSSI), or an interference-related parameter ($H_j(s)$), in particular a PSSCH Interference Headroom, or a function of Ij(s) or a function of Hj(s), selecting 704 by the network entity 106 one or more sidelink radio resources (s) from the plurality of sidelink radio resources for communication between the at least one neighboring wireless communication device 101 *i* and the wireless communication device 101*j*, or another wireless communication device ($I$), on the basis of a comparison between $S_j(i)$ and C$_j$(s). In an embodiment of the invention further selecting 706 by the network entity 106 one or more sidelink radio resources (s) from the plurality of sidelink radio resources for communication between a wireless communication device 101*i* and at least one neighboring wireless communication device 101*j*, on the basis of the relative motion, which is relative velocity, of the transmitting wireless communication device 101*i* and/or the at least one receiving wireless communication device 101*j*, with respect to the wireless communication devices already transmitting and/or receiving in the sidelink radio resource (s). The relative motion, which is relative velocity, can be derived from periodic position reports received by the network entity 106 from the wireless communication devices.

In the invention, the method 700 is performed by the network entity 106 described above. Further features of the method 700 result directly from the functionality of the network entity 106 and its different embodiments.

While a particular feature or aspect of the disclosure may have been disclosed with respect to only one of several implementations or embodiments, such a feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

**Claims**

1. A wireless communication device (101$j$) for V2X communication in a wireless communication network (100) supporting a plurality of sidelink radio resources, wherein the wireless communication device (101$j$) comprises:
   a transceiver (101$j$-1) configured to:

   measure a first signal strength parameter $P_{ij}$, which is a Physical Sidelink Shared Channel, PSSCH, Reference Signal Received Power, RSRP, associated with at least one neighboring wireless communication device (101$i$); and
   measure a second signal strength parameter $I_j(s)$, which is a Sidelink Received Signal Strength Indicator, S-RSSI, associated with at least one of the plurality of sidelink radio resources s; and
   a processor (101$j$-2) configured to:

   determine an interference-related parameter $H_j(s)$, which is a PSSCH Interference Headroom, associated with at least one of the plurality of sidelink radio resources s;
   compute a first map $S_j$ mapping an identity-related parameter $ID_i$ of the at least one neighboring wireless communication device (101$i$) to $P_{ij}$ or a function of $P_{ij}$; and
   compute a second map $C_j$ mapping at least one sidelink radio resource s to $I_j(s)$ or $H_j(s)$ or a function of $I_j(s)$ or $H_j(s)$;
   the transceiver (101$j$-1) is further configured to transmit $S_j$ and $C_j$ to a network entity (106), which is a base station, and to at least one neighboring wireless communication device, wherein $S_j$ and $C_j$ are for use in selecting one or more sidelink radio resources s from the plurality of sidelink radio resources; and

   the transceiver (101$j$-1) is further configured to transmit to the at least one neighboring wireless communication device (101$i$) a set $\mathcal{T}_j$ of transmitting sidelink radio resources and a set $\mathcal{R}_j$ of receiving sidelink radio resources of the wireless communication device (101$j$).

2. The wireless communication device (101$j$) of claim 1, wherein the plurality of sidelink radio resources s are arranged in a superframe, which is of a physical shared channel, that comprises semi-persistent allocations of the wireless communication devices.

3. The wireless communication device (101$j$) of any of the preceding claims, wherein the identity-related parameter $ID_i$ of the at least one neighboring wireless communication device (101$i$) is indicated by a resource indication value corresponding to the location, in time and frequency, of a recent transmission from wireless communication device (101$i$) to wireless communication device (101$j$), or a function thereof.

4. The wireless communication device (101$j$) of any of the preceding claims, wherein the function of $P_{ij}$ in the first map $S_j$ is a quantization of $P_{ij}$.

5. The wireless communication device (101$j$) of any of the preceding claims, wherein the function of $I_j(s)$ or $H_j(s)$ in the second map $C_j$ is a quantization of $I_j(s)$ or $H_j(s)$.

6. The wireless communication device (101$j$) of claim 5, wherein the processor (101$j$-2) is further configured to set the value of $C_j(s)$ to:

   $H_j(s)$ or a function of $H_j(s)$, if the sidelink radio resource (s) is part of the set $\mathcal{R}_j$; and
   $I_j(s)$ or a function of $I_j(s)$, if the sidelink radio resource (s) is not part of the set $\mathcal{R}_j$.

7. The wireless communication device (101$j$) of the preceding claim, wherein the function of $H_j(s)$ and $I_j(s)$ is based on the quantization of $P_{ij}$.

8. A wireless communication device (101$i$) for V2X communication in a wireless communication network (100) supporting a plurality of sidelink radio resources, wherein the wireless communication device (101$i$) comprises:

   a transceiver (101i-1) being configured to receive, from at least one neighboring wireless communication device (101$j$), a first map $S_j$ mapping an identity-related parameter $ID_i$ of the wireless communication device (101$i$) to a first signal strength parameter $P_{ij}$, which is a Physical Sidelink Shared Channel, PSSCH, Reference Signal Received Power, RSRP, or a function of $P_{ij}$, and a second map $C_j$ mapping at least one sidelink radio resource s to a second signal strength parameter $I_j(s)$, which is a Sidelink Received Signal Strength Indicator S-RSSI, or an interference-related parameter $H_j(s)$, which is a PSSCH Interference Headroom, or a function of $I_j(s)$ or $H_j(s)$;

the transceiver ($101i_{-1}$) being further configured to receive, from the at least one neighboring wireless communication device ($101j$), a set $\mathcal{T}_j$ of transmitting sidelink radio resources and a set $\mathcal{R}_j$ of receiving sidelink radio resources of the wireless communication device ($101j$); and a processor ($101i$-2) configured to select one or more sidelink radio resources s from the plurality of sidelink radio resources for communicating with the neighboring wireless communication device ($101j$), or with another wireless communication device $l$, which is on the basis of a comparison between $S_j(i)$ and $C_j(s)$.

9. The wireless communication device ($101i$) of claim 8, wherein the processor ($101i$-2) is further configured to select one or more sidelink radio resources (s) from the plurality of sidelink radio resources for communicating with at least one neighboring wireless communication device ($101j$), which is on the basis of the relative motion, which is relative velocity, of the transmitting wireless communication device ($101i$) and the at least one receiving wireless communication device ($101j$), with respect to the wireless communication devices already transmitting and receiving in the sidelink radio resource s.

10. A network entity (106), which is a base station, for V2X communication in a wireless communication network (100) supporting a plurality of sidelink radio resources, wherein the communication network (100) comprises a plurality of wireless communication devices, wherein the network entity (106) comprises:

    a transceiver (106-1) being configured to receive, from a wireless communication device ($101j$) of the plurality of wireless communication devices, a first map $S_j$ mapping an identity-related parameter $ID_i$ of at least one neighboring wireless communication device ($101i$) of the wireless communication device ($101j$) to a first signal strength parameter $P_{ij}$, which is a Physical Sidelink Shared Channel, PSSCH, Reference Signal Received Power RSRP, or a function of $P_{ij}$, and a second map $C_j$ mapping at least one sidelink radio resource s to a second signal strength parameter $I_j(s)$, which is a Sidelink Received Signal Strength Indicator, S-RSSI, or an interference-related parameter $H_j(s)$, which is a PSSCH Interference Headroom, or a function of $I_j(s)$ or $H_j(s)$; and a processor (106-2) configured to select one or more sidelink radio resources s from the plurality of sidelink radio resources for communication between the at least one neighboring wireless communication device ($101i$) and the wireless communication device ($101j$), or another wireless communication device $l$, which is on the basis of a comparison between $S_j(i)$ and $C_j(s)$.

11. The network entity (106) of claim 10, wherein the processor (106-2) is further configured to select one or more sidelink radio resources s from the plurality of sidelink radio resources for communication between a wireless communication device ($101i$) and at least one neighboring wireless communication device ($101j$), which is on the basis of the relative motion, which is relative velocity, of the transmitting wireless communication device ($101i$) and the at least one receiving wireless communication device ($101j$), with respect to the wireless communication devices already transmitting and receiving in the sidelink radio resource s.

12. A method (500) for V2X communication in a wireless communication network (100) supporting a plurality of sidelink radio resources, wherein the method (500) comprises the steps of:

    measuring (502) a first signal strength parameter $P_{ij}$, which is a Physical Sidelink Shared Channel, PSSCH, Reference Signal Received Power, RSRP, associated with at least one neighboring wireless communication device ($101i$); and measuring (504) a second signal strength parameter $I_j(s)$, which is a Sidelink Received Signal Strength Indicator, S-RSSI, associated with at least one of the plurality of sidelink radio resources s; and determining (506) an interference-related parameter $H_j(s)$, which is a PSSCH Interference Headroom, associated with at least one of the plurality of sidelink radio resources s; computing (508) a first map $S_j$ mapping an identity-related parameter $ID_i$ of the at least one neighboring wireless communication device ($101i$) to $P_{ij}$ or a function of $P_{ij}$; and computing (510) a second map $C_j$ mapping at least one sidelink radio resource s to $I_j(s)$ or $H_j(s)$ or a function of $I_j(s)$ or $H_j(s)$; transmitting (512) $S_j$ and $C_j$ to a network entity (106), which is a base station, and to at least one neighboring wireless communication device, wherein $S_j$ and $C_j$ are for use in selecting one or more sidelink radio resources s from the plurality of sidelink radio resources; and transmitting to the at least one neighboring wireless communication device (101$i$) a set $\mathcal{T}_j'$ of transmitting sidelink radio resources and a set $\mathcal{R}_j$ of receiving sidelink radio resources of the wireless communication device (101$j$).

13. A method (600) for V2X communication in a wireless communication network (100) supporting a plurality of sidelink radio resources, wherein the method (600) comprises the steps of:

receiving (602), from at least one neighboring wireless communication device (101$j$), a first map $S_j$ mapping an identity-related parameter $ID_i$ of the wireless communication device (101$i$) to a first signal strength parameter $P_{ij}$, which is a Physical Sidelink Shared Channel, PSSCH, Reference Signal Received Power, RSRP, or a function of $P_{ij}$, and a second map $C_j$ mapping at least one sidelink radio resource s to a second signal strength parameter $I_j(s)$, which is a Sidelink Received Signal Strength Indicator, S-RSSI, or an interference-related parameter $H_j(s)$, which is a PSSCH Interference Headroom, or a function of $I_j(s)$ or $H_j(s)$;
receiving (604), from the at least one neighboring wireless communication device (101$j$), a set $\mathcal{T}_j'$ of transmitting sidelink radio resources and a set $\mathcal{R}_j$ of receiving sidelink radio resources of the wireless communication device (101$j$);
selecting (606) one or more sidelink radio resources s from the plurality of sidelink radio resources for communicating with the neighboring wireless communication device (101$j$), or with another wireless communication device $l$, which is on the basis of a comparison between $S_j(i)$ and $C_j(s)$; and
selecting (608) one or more sidelink radio resources s from the plurality of sidelink radio resources for communicating with at least one neighboring wireless communication device (101$j$), which is on the basis of the relative motion, which is relative velocity, of the transmitting wireless communication device (101$i$) and the at least one receiving wireless communication device (101$j$), with respect to the wireless communication devices already transmitting and receiving in the sidelink radio resource s.

14. A method (700) for V2X communication in a wireless communication network (100) supporting a plurality of sidelink radio resources, wherein the communication network (100) comprises a network entity (106), which is a base station, as well as a plurality of wireless communication devices, wherein the method (700) comprises the steps of:

receiving (702) at the network entity (106), from a wireless communication device (101$j$) of the plurality of wireless communication devices, a first map $S_j$ mapping an identity-related parameter $ID_i$ of at least one neighboring wireless communication device (101$i$) of the wireless communication device (101$j$) to a first signal strength parameter $P_{ij}$, which is a Physical Sidelink Shared Channel, PSSCH, Reference Signal Received Power, RSRP, or a function of $P_{ij}$, and a second map $C_j$ mapping at least one sidelink radio resource s to a second signal strength parameter $I_j(s)$, which is a Sidelink Received Signal Strength Indicator, S-RSSI, or an interference-related parameter $H_j(s)$, which is a PSSCH Interference Headroom, or a function of $I_j(s)$ or $H_j(s)$;
the network entity (106) selecting (704) one or more sidelink radio resources s from the plurality of sidelink radio resources for communication between the at least one neighboring wireless communication device (101$i$) and the wireless communication device (101$j$), or another wireless communication device $l$, which is on the basis of a comparison between $S_j(i)$ and $C_j(s)$; and
the network entity (106) selecting (706) one or more sidelink radio resources s from the plurality of sidelink radio resources for communication between a wireless communication device (101$i$) and at least one neighboring wireless communication device (101$j$), which is on the basis of the relative motion, which is relative velocity, of the transmitting wireless communication device (101$i$) and the at least one receiving wireless communication device (101$j$), with respect to the wireless communication devices already transmitting and receiving in the sidelink radio resource s.

**Patentansprüche**

1. Drahtlose Kommunikationsvorrichtung (101$j$) für die V2X-Kommunikation in einem drahtlosen Kommunikationsnetzwerk (100), das mehrere Sidelink-Funkressourcen unterstützt, wobei die drahtlose Kommunikationsvorrichtung (101$j$) Folgendes umfasst:
einen Transceiver (101$j$-1), der wie folgt konfiguriert ist:

Messen eines ersten Signalstärkeparameters $P_{ij}$, der eine Referenz-Empfangssignalleistung

(Reference Signal Received Power - RSRP) eines physischen gemeinsam genutzten Sidelink-Kanals (Physical Sidelink Shared Channel - PSSCH) ist, die mindestens einer benachbarten drahtlosen Kommunikationsvorrichtung (101i) zugeordnet ist; und

Messen eines zweiten Signalstärkeparameters $I_j(s)$, der ein Sidelink-Empfangssignalstärke-Indikator (Sidelink Received Signal Strength Indicator - SRSSI) ist, der mindestens einer der mehreren Sidelink-Funkressourcen s zugeordnet ist; und

einen Prozessor (101j-2), der wie folgt konfiguriert ist:

Bestimmen eines interferenzbezogenen Parameters $H_j(s)$, der ein PSSCH Interferenz-Headroom ist, der mindestens einer der mehreren Sidelink-Funkressourcen s zugeordnet ist;

Berechnen einer ersten Map $S_j$, die einen identitätsbezogenen Parameter $ID_i$ der mindestens einen benachbarten drahtlosen Kommunikationsvorrichtung (101i) auf $P_{ij}$ oder eine Funktion von $P_{ij}$ abbildet; und

Berechnen einer zweiten Map $C_j$, die mindestens eine Sidelink-Funkressource s auf $I_j(s)$ oder $H_j(s)$ oder eine Funktion von $I_j(s)$ oder $H_j(s)$ abbildet;

wobei der Transceiver (101j-1) ferner konfiguriert ist, um $S_j$ und $C_j$ an eine Netzwerkeinheit (106), die eine Basisstation ist, und an mindestens eine benachbarte drahtlose Kommunikationsvorrichtung zu senden, wobei $S_j$ und $C_j$ zur Verwendung bei der Auswahl einer oder mehrerer Sidelink-Funkressourcen s aus den mehreren Sidelink-Funkressourcen dienen; und

wobei der Transceiver (101j-1) ferner konfiguriert ist, um an die mindestens eine benachbarte drahtlose Kommunikationsvorrichtung (101i) einen Satz $T_j$ von sendenden Sidelink-Funkressourcen und einen Satz $R_j$ von empfangenden Sidelink-Funkressourcen der drahtlosen Kommunikationsvorrichtung (101j) zu senden.

2. Drahtlose Kommunikationsvorrichtung (101j) nach Anspruch 1, wobei die mehreren Sidelink-Funkressourcen s in einem Superframe angeordnet sind, der aus einem physischen gemeinsam genutzten Kanal besteht, der semi-persistente Zuweisungen der drahtlosen Kommunikationsvorrichtungen umfasst.

3. Drahtlose Kommunikationsvorrichtung (101j) nach einem der vorhergehenden Ansprüche, wobei der identitätsbezogene Parameter $ID_i$ der mindestens einen benachbarten drahtlosen Kommunikations-

vorrichtung (101i) durch einen Ressourcen-Angabewert angegeben wird, der der Zeit- und Frequenzposition eines kürzlich erfolgten Sendens von einer drahtlosen Kommunikationsvorrichtung (101i) zu einer drahtlosen Kommunikationsvorrichtung (101j) oder einer Funktion davon entspricht.

4. Drahtlose Kommunikationsvorrichtung (101j) nach einem der vorhergehenden Ansprüche, wobei die Funktion von $P_{ij}$ in der ersten Map $S_j$ eine Quantisierung von $P_{ij}$ ist.

5. Drahtlose Kommunikationsvorrichtung (101j) nach einem der vorhergehenden Ansprüche, wobei die Funktion von $I_j(s)$ oder $H_j(s)$ in der zweiten Map $C_j$ eine Quantisierung von $I_j(s)$ oder $H_j(s)$ ist.

6. Drahtlose Kommunikationsvorrichtung (101j) nach Anspruch 5, wobei der Prozessor (101j-2) ferner konfiguriert ist, um den Wert von $C_j(s)$ wie folgt einzustellen:

$H_j(s)$ oder eine Funktion von $H_j(s)$, wenn die Sidelink-Funkressource (s) Teil des Satzes $R_j$ ist; und

$I_j(s)$ oder eine Funktion von $I_j(s)$, wenn die Sidelink-Funkressource (s) nicht Teil des Satzes $R_j$ ist.

7. Drahtlose Kommunikationsvorrichtung (101j) nach dem vorhergehenden Anspruch, wobei die Funktion von $H_j(s)$ und $I_j(s)$ auf der Quantisierung von $P_{ij}$ basiert.

8. Drahtlose Kommunikationsvorrichtung (101i) für die V2X-Kommunikation in einem drahtlosen Kommunikationsnetzwerk (100), das mehrere Sidelink-Funkressourcen unterstützt, wobei die drahtlose Kommunikationsvorrichtung (101i) Folgendes umfasst:

einen Transceiver (101i-1), der konfiguriert ist, um von mindestens einer benachbarten drahtlosen Kommunikationsvorrichtung (101j), eine erste Map $S_j$ zu empfangen, die einen identitätsbezogenen Parameter $ID_i$ der drahtlosen Kommunikationsvorrichtung (101i) auf einen ersten Signalstärkeparameter $P_{ij}$ abbildet, der eine RSRP eines PSSCH oder eine Funktion von $P_{ij}$ ist, und eine zweite Map $C_j$, die mindestens eine Sidelink-Funkressource s auf einen zweiten Signalstärke-Parameter $I_j(s)$, der ein S-RSSI ist, oder einen interferenzbezogenen Parameter $H_j(s)$, der ein PSSCH-Interferenz-Headroom oder eine Funktion von $I_j(s)$ oder $H_j(s)$ ist, abbildet;

wobei der Transceiver (101i-1) ferner konfiguriert ist, um von der mindestens einen benachbarten drahtlosen Kommunikationsvorrichtung (101$j$) einen Satz $T_j$ von sendenden Sidelink-Funkressourcen und einen Satz $R_j$ von empfangenden Sidelink-Funkressourcen der drahtlosen Kommunikationsvorrichtung (101$j$) zu empfangen; und

einen Prozessor (101$i$-2), der konfiguriert ist, um eine oder mehrere Sidelink-Funkressourcen s aus den mehreren Sidelink-Funkressourcen zum Kommunizieren mit der benachbarten drahtlosen Kommunikationsvorrichtung (101$j$) oder mit einer anderen drahtlosen Kommunikationsvorrichtung $l$ auszuwählen, was auf der Grundlage eines Vergleichs zwischen $S_j(i)$ und $C_j(s)$ erfolgt.

9. Drahtlose Kommunikationsvorrichtung (101$i$) nach Anspruch 8, wobei der Prozessor (101$i$-2) ferner konfiguriert ist, um eine oder mehrere Sidelink-Funkressourcen (s) aus den mehreren Sidelink-Funkressourcen auszuwählen, zum Kommunizieren mit mindestens einer benachbarten drahtlosen Kommunikationsvorrichtung (101$j$), was auf der Grundlage der relativen Bewegung, die eine relative Geschwindigkeit ist, der sendenden drahtlosen Kommunikationsvorrichtung (101$i$) und der mindestens einen empfangenden drahtlosen Kommunikationsvorrichtung (101$j$) in Bezug auf die drahtlosen Kommunikationsvorrichtungen erfolgt, die bereits in der Sidelink-Funkressource s senden und empfangen.

10. Netzwerkeinheit (106), die eine Basisstation ist, für die V2X-Kommunikation in einem drahtlosen Kommunikationsnetzwerk (100), das mehrere Sidelink-Funkressourcen unterstützt, wobei das Kommunikationsnetzwerk (100) mehrere drahtlose Kommunikationsvorrichtungen umfasst, wobei die Netzwerkeinheit (106) Folgendes umfasst:

einen Transceiver (106-1), der konfiguriert ist, um von einer drahtlosen Kommunikationsvorrichtung (101$j$) von den mehreren drahtlosen Kommunikationsvorrichtungen eine erste Map $S_j$ zu empfangen, die einen identitätsbezogenen Parameter $ID_i$ von mindestens einer benachbarten drahtlosen Kommunikationsvorrichtung (101$i$) der drahtlosen Kommunikationsvorrichtung (101$j$) auf einen ersten Signalstärkeparameter $P_{ij}$ abbildet, der eine RSRP eines PSSCH oder eine Funktion von $P_{ij}$ ist, und eine zweite Map $C_j$, die mindestens eine Sidelink-Funkressource s auf einen zweiten Signalstärke-Parameter $I_j(s)$, der ein S-RSSI ist, oder einen interferenzbezogenen Parameter $H_j(s)$, der ein PSSCH-Interferenz-Headroom oder eine Funktion von $I_j(s)$ oder $H_j(s)$ ist, abbildet; und

einen Prozessor (106-2), der konfiguriert ist, um eine oder mehrere Sidelink-Funkressourcen s

aus den mehreren Sidelink-Funkressourcen zum Kommunizieren zwischen der mindestens einen benachbarten drahtlosen Kommunikationsvorrichtung (101$i$) und der drahtlosen Kommunikationsvorrichtung (101$j$) oder einer anderen drahtlosen Kommunikationsvorrichtung $l$ auszuwählen, was auf der Grundlage eines Vergleichs zwischen $S_j(i)$ und $C_j(s)$ erfolgt.

11. Netzwerkeinheit (106) nach Anspruch 10, wobei der Prozessor (106-2) ferner konfiguriert ist, um eine oder mehrere Sidelink-Funkressourcen s aus den mehreren Sidelink-Funkressourcen für die Kommunikation zwischen einer drahtlosen Kommunikationsvorrichtung (101$i$) und mindestens einer benachbarten drahtlosen Kommunikationsvorrichtung (101$j$) auszuwählen, was auf der Grundlage der relativen Bewegung, die eine relative Geschwindigkeit ist, der sendenden drahtlosen Kommunikationsvorrichtung (101$i$) und der mindestens einen empfangenden drahtlosen Kommunikationsvorrichtung (101$j$) in Bezug auf die drahtlosen Kommunikationsvorrichtungen erfolgt, die bereits in der Sidelink-Funkressource s senden und empfangen.

12. Verfahren (500) für die V2X-Kommunikation in einem drahtlosen Kommunikationsnetzwerk (100), das mehrere Sidelink-Funkressourcen unterstützt, wobei das Verfahren (500) die folgenden Schritte umfasst:

Messen (502) eines ersten Signalstärkeparameters $P_{ij}$, der eine RSRP eines PSSCH ist, der mindestens einer benachbarten drahtlosen Kommunikationsvorrichtung (101$i$) zugeordnet ist; und

Messen (504) eines zweiten Signalstärkeparameters $I_j(s)$, der ein S-RSSI ist, der mindestens einer der mehreren Sidelink-Funkressourcen s zugeordnet ist; und

Bestimmen (506) eines interferenzbezogenen Parameters $H_j(s)$, der ein PSSCH-Interferenz-Headroom ist, der mindestens einer der mehreren Sidelink-Funkressourcen s zugeordnet ist;

Berechnen (508) einer ersten Map $S_j$, die einen identitätsbezogenen Parameter $ID_i$ der mindestens einen benachbarten drahtlosen Kommunikationsvorrichtung (101$i$) auf $P_{ij}$ oder eine Funktion von $P_{ij}$ abbildet; und

Berechnen (510) einer zweiten Map $C_j$, die mindestens eine Sidelink-Funkressource s auf $I_j(s)$ oder $H_j(s)$ oder eine Funktion von $I_j(s)$ oder $H_j(s)$ abbildet;

Senden (512) von $S_j$ und $C_j$ an eine Netzwerkeinheit (106), die eine Basisstation ist, und an mindestens eine benachbarte drahtlose Kommunikationsvorrichtung, wobei $S_j$ und $C_j$ zur Verwendung bei der Auswahl einer oder mehrerer Sidelink-Funkressourcen s aus den mehreren Sidelink-Funkressourcen dienen; und Senden an die mindestens eine benachbarte drahtlose Kommunikationsvorrichtung (101*i*) eines Satzes $T_j$ von sendenden Sidelink-Funkressourcen und eines Satzes $R_j$ von empfangenden Sidelink-Funkressourcen der drahtlosen Kommunikationsvorrichtung *(101j)*.

13. Verfahren (600) für die V2X-Kommunikation in einem drahtlosen Kommunikationsnetzwerk (100), das mehrere Sidelink-Funkressourcen unterstützt, wobei das Verfahren (600) die folgenden Schritte umfasst:

Empfangen (602) von mindestens einer benachbarten drahtlosen Kommunikationsvorrichtung (101*j*) einer ersten Map $S_j$, die einen identitätsbezogenen Parameter $ID_i$ der drahtlosen Kommunikationsvorrichtung (101*i*) auf einen ersten Signalstärkeparameter $P_{ij}$ abbildet, der eine RSRP eines PSSCH oder eine Funktion von $P_{ij}$ ist, und einer zweiten Map $C_j$, die mindestens eine Sidelink-Funkressource s auf einen zweiten Signalstärke-Parameter $I_j(s)$, der ein S-RSSI ist, oder einen interferenzbezogenen Parameter $H_j(s)$, der ein PSSCH-Interferenz-Headroom oder eine Funktion von $I_j(s)$ oder $H_j(s)$ ist, abbildet;
Empfangen (604) von der mindestens einen benachbarten drahtlosen Kommunikationsvorrichtung (101*j*) eines Satzes $T_j$ von sendenden Sidelink-Funkressourcen und eines Satzes $R_j$ von empfangenden Sidelink-Funkressourcen der drahtlosen Kommunikationsvorrichtung (101*j*);
Auswählen (606) einer oder mehrerer Sidelink-Funkressourcen s aus den mehreren Sidelink-Funkressourcen zum Kommunizieren mit der benachbarten drahtlosen Kommunikationsvorrichtung (101*j*) oder mit einer anderen drahtlosen Kommunikationsvorrichtung *l*, was auf der Grundlage eines Vergleichs zwischen $S_j(i)$ und $C_j(s)$ erfolgt; und
Auswählen (608) einer oder mehrerer Sidelink-Funkressourcen s aus den mehreren Sidelink-Funkressourcen zum Kommunizieren mit mindestens einer benachbarten drahtlosen Kommunikationsvorrichtung (101*j*), was auf der Grundlage der relativen Bewegung, die eine relative Geschwindigkeit ist, der sendenden drahtlosen Kommunikationsvorrichtung (101*i*) und der mindestens einen empfangenden drahtlosen Kommunikationsvorrichtung (101*j*) in Bezug auf die drahtlosen Kommunikationsvorrichtungen erfolgt, die bereits in der Sidelink-Funkressource s senden und empfangen.

14. Verfahren (700) für die V2X-Kommunikation in einem drahtlosen Kommunikationsnetzwerk (100), das mehrere Sidelink-Funkressourcen unterstützt, wobei das Kommunikationsnetzwerk (100) eine Netzwerkeinheit (106), die eine Basisstation ist, sowie mehrere drahtlose Kommunikationsvorrichtungen umfasst, wobei das Verfahren (700) die folgenden Schritte umfasst:

Empfangen (702) an der Netzwerkeinheit (106) von einer drahtlosen Kommunikationsvorrichtung (101*j*) der mehreren drahtlosen Kommunikationsvorrichtungen einer ersten Map $S_j$, die einen identitätsbezogenen Parameter $ID_i$ von mindestens einer benachbarten drahtlosen Kommunikationsvorrichtung (101*i*) der drahtlosen Kommunikationsvorrichtung (101*j*) auf einen ersten Signalstärkeparameter $P_{ij}$ abbildet, der eine RSRP eines PSSCH oder eine Funktion von $P_{ij}$ ist, und einer zweiten Map $C_j$, die mindestens eine Sidelink-Funkressource s auf einen zweiten Signalstärke-Parameter $I_j(s)$, der ein S-RSSI ist, oder einen interferenzbezogenen Parameter $H_j(s)$, der ein PSSCH-Interferenz-Headroom oder eine Funktion von $I_j(s)$ oder $H_j(s)$ ist, abbildet;
wobei die Netzwerkeinheit (106) eine oder mehrere Sidelink-Funkressourcen s aus den mehreren Sidelink-Funkressourcen zum Kommunizieren zwischen der mindestens einen benachbarten drahtlosen Kommunikationsvorrichtung (101*i*) und der drahtlosen Kommunikationsvorrichtung (101*j*) oder einer anderen drahtlosen Kommunikationsvorrichtung *l* auswählt (704), was auf der Grundlage eines Vergleichs zwischen $S_j(i)$ und $C_j(s)$ erfolgt; und
wobei die Netzwerkeinheit (106) eine oder mehrere Sidelink-Funkressourcen s aus den mehreren Sidelink-Funkressourcen für die Kommunikation zwischen einer drahtlosen Kommunikationsvorrichtung (101*i*) und mindestens einer benachbarten drahtlosen Kommunikationsvorrichtung (101*j*) auswählt (706), was auf der Grundlage der relativen Bewegung, die eine relative Geschwindigkeit ist, der sendenden drahtlosen Kommunikationsvorrichtung (101*i*) und der mindestens einen empfangenden drahtlosen Kommunikationsvorrichtung *(101j)* in Bezug auf die drahtlosen Kommunikationsvorrichtungen erfolgt, die bereits in der Sidelink-Funkressource s senden und empfangen.

**Revendications**

1. Dispositif de communication sans fil (101*j*) destiné à une communication V2X dans un réseau de communication sans fil (100) prenant en charge une pluralité de ressources radio de liaison latérale, le dispositif de communication sans fil (101$j$) comprenant : un émetteur-récepteur (101$j$-1) configuré pour :

mesurerun premier paramètre d'intensité de signal $P_{ij}$ qui est une puissance reçue de signal de référence, RSRP, de canal partagé de liaison latérale physique, PSSCH, associé à au moins un dispositif de communication sans fil voisin (101$i$) ; et

mesurer un second paramètre d'intensité de signal $I_j(s)$, qui est un indicateur d'intensité de signal reçu de liaison latérale, S-RSSI, associé à au moins une parmi la pluralité de ressources radio de liaison latérale s ; et

un processeur (101$j$-2) configuré pour :

déterminer un paramètre lié à l'interférence $H_j(s)$, qui est une marge d'interférence de PSSCH, associé à au moins une parmi la pluralité de ressources radio de liaison latérale s ;

calculer une première carte $S_j$ mappant un paramètre lié à l'identité $ID_i$ dudit au moins un dispositif de communication sans fil voisin (101$i$) à $P_{ij}$ ou une fonction de $P_{ij}$ ; et

calculer une seconde carte $C_j$ mappant au moins une ressource radio de liaison latérale s à $I_j(s)$ ou $H_j(s)$ ou une fonction d'$I_j(s)$ ou $H_j(s)$ ;

l'émetteur-récepteur (101$j$-1) est configuré en outre pour transmettre $S_j$ et $C_j$ à une entité de réseau (106), qui est une station de base, et à au moins un dispositif de communication sans fil voisin, $S_j$ et $C_j$ étant destinés à être utilisés pour sélectionner une ou plusieurs ressources radio de liaison latérale s à partir de la pluralité de ressources radio de liaison latérale ; et

l'émetteur-récepteur (101$j$-1) est configuré en outre pour transmettre audit au moins un dispositif de communication sans fil voisin (101$i$) un ensemble $T_j$ de ressources radio de liaison latérale de transmission et un ensemble $R_j$ de ressources radio de liaison latérale de réception du dispositif de communication sans fil (101$j$).

2. Dispositif de communication sans fil (101$j$) selon la revendication 1, dans lequel la pluralité de ressources radio de liaison latérale s sont agencées dans une supertrame, qui est d'un type de canal physique partagé et qui comprend des allocations semi-persistantes des dispositifs de communication sans fil.

3. Dispositif de communication sans fil (101$j$) selon l'une quelconque des revendications précédentes, dans lequel le paramètre lié à l'identité $ID_i$ dudit au moins un dispositif de communication sans fil voisin (101$i$) est indiqué par une valeur d'indication de ressource correspondant à l'emplacement, dans le temps et la fréquence, d'une transmission récente provenant du dispositif de communication sans fil (101$i$) au dispositif de communication sans fil (101$j$), ou une fonction de celui-ci.

4. Dispositif de communication sans fil (101$j$) selon l'une quelconque des revendications précédentes, dans lequel la fonction de $P_{ij}$ dans la première carte $S_j$ est une quantification de $P_{ij}$.

5. Dispositif de communication sans fil (101$j$) selon l'une quelconque des revendications précédentes, dans lequel la fonction d'$I_j(s)$ ou $H_j(s)$ dans la seconde carte $C_j$ est une quantification d'$I_j(s)$ ou $H_j(s)$.

6. Dispositif de communication sans fil (101$j$) selon la revendication 5, dans lequel le processeur (101$j$-2) est configuré en outre pour régler la valeur de $C_j(s)$ sur :

$H_j(s)$ ou une fonction de $H_j(s)$, si la ressource radio de liaison latérale (s) fait partie de l'ensemble $R_j$ ; et

$I_j(s)$ ou une fonction d'$I_j(s)$, si la ressource radio de liaison latérale (s) ne fait pas partie de l'ensemble $R_j$.

7. Dispositif de communication sans fil (101$j$) selon la revendication précédente, dans lequel la fonction de $H_j(s)$ et d'$I_j(s)$ est basée sur la quantification de $P_{ij}$.

8. Dispositif de communication sans fil (101$i$) destiné à une communication V2X dans un réseau de communication sans fil (100) prenant en charge une pluralité de ressources radio de liaison latérale, le dispositif de communication sans fil (101$i$) comprenant :

un émetteur-récepteur (101$i$-1) configuré pour recevoir, à partir d'au moins un dispositif de communication sans fil voisin (101$j$), une première carte $S_j$ mappant un paramètre lié à l'identité $ID_i$ du dispositif de communication sans fil (101$i$) à un premier paramètre d'intensité de signal $P_{ij}$, qui est une puissance reçue de signal de référence, RSRP, de canal partagé de liaison latérale physique, PSSCH, ou une fonction de $P_{ij}$ et une seconde carte $C_j$ mappant au moins une ressource radio de liaison latérale s à un second paramètre d'intensité de signal $I_j(s)$, qui est un indicateur d'intensité de signal reçu de liaison latérale S-RSSI, ou un paramètre lié à l'interférence $H_j(s)$, qui est une marge d'interférence de PSSCH, ou une fonction d'$I_j(s)$ ou $H_j(s)$ ;

l'émetteur-récepteur (101$i$-1) étant configuré en outre pour recevoir, à partir dudit au moins un dispositif de communication sans fil voisin (101$j$), un ensemble $T_j$ de ressources radio de liaison latérale de transmission et un ensemble $R_j$ de ressources radio de liaison latérale de réception du dispositif de communication sans fil (101j) ; et

un processeur (101$i$-2) configuré pour sélectionner une ou plusieurs ressources radio de liaison latérale s dans la pluralité de ressources radio de liaison latérale destinées à communiquer avec le dispositif de communication sans fil voisin (101$j$), ou avec un autre dispositif de communication sans fil $I$, qui est basé sur une comparaison entre $S_j(i)$ et $C_j(s)$.

9. Dispositif de communication sans fil (101$i$) selon la revendication 8, dans lequel le processeur (101$i$-2) est configuré en outre pour sélectionner une ou plusieurs ressources radio de liaison latérale (s) parmi la pluralité de ressources radio de liaison latérale destinées à communiquer avec au moins un dispositif de communication sans fil voisin (101$j$), qui est basé sur le mouvement relatif, qui est la vitesse relative, du dispositif de communication sans fil de transmission (101$i$) et dudit au moins un dispositif de communication sans fil de réception (101$j$), par rapport aux dispositifs de communication sans fil transmettant et recevant déjà dans les ressources radio de liaison latérale $s$.

10. Entité de réseau (106), qui est une station de base, destinée à une communication V2X dans un réseau de communication sans fil (100) prenant en charge une pluralité de ressources radio de liaison latérale, dans laquelle le réseau de communication (100) comprend une pluralité de dispositifs de communication sans fil, l'entité de réseau (106) comprenant :

un émetteur-récepteur (106-1) configuré pour recevoir, à partir d'un dispositif de communication sans fil (101$j$) de la pluralité de dispositifs de communication sans fil, une première carte $S_j$ mappant un paramètre lié à l'identité $IDi$ d'au moins un dispositif de communication sans fil voisin (101$i$) du dispositif de communication sans fil (101j) à un premier paramètre d'intensité de signal $P_{ij}$, qui est une puissance reçue de signal de référence, RSRP, de canal partagé de liaison latérale physique, PSSCH, ou une fonction de $P_{ij}$ et une seconde carte $C_j$ mappant au moins une ressource radio de liaison latérale s à un second paramètre d'intensité de signal $I_j(s)$, qui est un indicateur d'intensité de signal reçu de liaison latérale, S-RSSI, ou à un paramètre lié à l'interférence $H_j(s)$, qui est une marge d'interférence de PSSCH, ou une fonction d'$I_j(s)$ ou $H_j(s)$ ; et

un processeur (106-2) configuré pour sélectionner une ou plusieurs ressources radio de liaison latérale s parmi la pluralité de ressources radio de liaison latérale destinées à la communication entre ledit au moins un dispositif de communication sans fil voisin (101$i$) et le dispositif de communication sans fil (101$j$), ou un autre dispositif de communication sans fil I, qui est basée sur une comparaison entre $S_j(i)$ et $C_j(s)$.

11. Entité de réseau (106) selon la revendication 10, dans laquelle le processeur (106-2) est configuré en outre pour sélectionner une ou plusieurs ressources radio de liaison latérale s parmi la pluralité de ressources radio de liaison latérale destinées à une communication entre un dispositif de communication sans fil (101$i$) et au moins un dispositif de communication sans fil voisin (101j), qui est basée sur le mouvement relatif, qui est la vitesse relative, du dispositif de communication sans fil de transmission (101$i$) et dudit au moins un dispositif de communication sans fil de réception (101$j$), par rapport aux dispositifs de communication sans fil de transmission et de réception déjà dans les ressources radio de liaison latérale s.

12. Procédé (500) destiné à une communication V2X dans un réseau de communication sans fil (100) prenant en charge une pluralité de ressources radio de liaison latérale, le procédé (500) comprenant les étapes suivantes :

la mesure (502) d'un premier paramètre d'intensité de signal $P_{ij}$ qui est une puissance reçue de signal de référence, RSRP, de canal partagé de liaison latérale physique, PSSCH, associé à au moins un dispositif de communication sans fil voisin (101$i$) ; et

la mesure (504) d'un second paramètre d'intensité de signal Ij(s), qui est un indicateur d'intensité de signal reçu de liaison latérale, S-RSSI, associé à au moins une parmi la pluralité de ressources radio de liaison latérale s ; et

la détermination (506) d'un paramètre lié à l'interférence $H_j(s)$, qui est une marge d'interférence de PSSCH, associé à au moins une parmi la pluralité de ressources radio de liaison latérale s ;

le calcul (508) d'une première carte $S_j$ mappant un paramètre lié à l'identité $IDi$ dudit au moins un dispositif de communication sans fil voisin (101$i$) à $P_{ij}$ ou à une fonction de $P_{ij}$ ; et

le calcul (510) d'une seconde carte $C_j$ mappant au moins une ressource radio de liaison latérale s à $I_j(s)$ ou $H_j(s)$ ou à une fonction d'$I_j(s)$ ou $H_j(s)$ ;

la transmission (512) de $S_j$ et $C_j$ à une entité de réseau (106), qui est une station de base et à au moins un dispositif de communication sans

fil voisin, $S_j$ et $C_j$ étant destinés à être utilisés pour sélectionner une ou plusieurs ressources radio de liaison latérale s parmi la pluralité des ressources radio de liaison latérale ; et la transmission audit au moins un dispositif de communication sans fil voisin (101*i*) d'un ensemble $T_j$ de ressources radio de liaison latérale de transmission et d'un ensemble $R_j$ de ressources radio de liaison latérale de réception du dispositif de communication sans fil (101*j*).

13. Procédé (600) destiné à une communication V2X dans un réseau de communication sans fil (100) prenant en charge une pluralité de ressources radio de liaison latérale, le procédé (600) comprenant les étapes suivantes :

la réception (602), à partir d'au moins un dispositif de communication sans fil voisin (101j), d'une première carte $S_j$ mappant un paramètre lié à l'identité $ID_i$ du dispositif de communication sans fil (101*i*) à un premier paramètre d'intensité de signal Pij, qui est une puissance reçue de signal de référence, RSRP, de canal partagé de liaison latérale physique, PSSCH, ou une fonction de $P_{ij}$ et une seconde carte $C_j$ mappant au moins une ressource radio de liaison latérale s à un second paramètre d'intensité de signal $I_j(s)$, qui est un indicateur d'intensité de signal reçu de liaison latérale, S-RSSI, ou un paramètre lié à l'interférence $H_j(s)$, qui est une marge d'interférence de PSSCH, ou une fonction d'$I_j(s)$ ou $H_j(s)$ ;
la réception (604), à partir dudit au moins un dispositif de communication sans fil voisin (101j), d'un ensemble $T_j$ de ressources radio de liaison latérale de transmission et d'un ensemble $R_j$ de ressources radio de liaison latérale de réception du dispositif de communication sans fil (101*j*) ;
la sélection (606) d'une ou plusieurs ressources radio de liaison latérale s parmi la pluralité de ressources radio de liaison latérale destinées à communiquer avec le dispositif de communication sans fil voisin (101*j*), ou avec un autre dispositif de communication sans fil *I*, qui est basé sur une comparaison entre $S_j(i)$ et $C_j(s)$ ; et
la sélection (608) d'une ou plusieurs ressources radio de liaison latérale s parmi la pluralité de ressources radio de liaison latérale destinées à communiquer avec au moins un dispositif de communication sans fil voisin (101*j*), qui est basé sur le mouvement relatif, qui est la vitesse relative, du dispositif de communication sans fil de transmission (101*i*) et dudit au moins un dispositif de communication sans fil de réception (101*j*), par rapport aux dispositifs de communication sans fil transmettant et recevant déjà dans les ressources radio de liaison latérale s.

14. Procédé (700) destiné à une communication V2X dans un réseau de communication sans fil (100) prenant en charge une pluralité de ressources radio de liaison latérale, dans lequel le réseau de communication (100) comprend une entité de réseau (106), qui est une station de base, ainsi qu'une pluralité de dispositifs de communication sans fil, le procédé (700) comprenant les étapes suivantes :

la réception (702) au niveau de l'entité de réseau (106), à partir d'un dispositif de communication sans fil (101j) de la pluralité de dispositifs de communication sans fil, une première carte $S_j$ mappant un paramètre lié à l'identité $ID_i$, d'au moins un dispositif de communication sans fil voisin (101*i*) du dispositif de communication sans fil (101*j*) à un premier paramètre d'intensité de signal $P_{ij}$, qui est une puissance reçue de signal de référence, RSRP, de canal partagé de liaison latérale physique, PSSCH, ou une fonction de $P_{ij}$ et une seconde carte $C_j$ mappant au moins une ressource radio de liaison latérale s à un second paramètre d'intensité de signal $Ij(s)$, qui est un indicateur d'intensité de signal reçu de liaison latérale, S-RSSI, ou un paramètre lié à l'interférence $H_j(s)$, qui est une marge d'interférence de PSSCH, ou une fonction d'$I_j(s)$ ou $H_j(s)$ ;
l'entité de réseau (106) sélectionnant (704) une ou plusieurs ressources radio de liaison latérale s parmi la pluralité de ressources radio de liaison latérale destinées à une communication entre ledit au moins un dispositif de communication sans fil voisin (101*i*) et le dispositif de communication sans fil (101*j*), ou un autre dispositif de communication sans fil *I*, qui est basé sur une comparaison entre $S_j(i)$ et $C_j(s)$ ; et
l'entité de réseau (106) sélectionnant (706) une ou plusieurs ressources radio de liaison latérale s parmi la pluralité de ressources radio de liaison latérale destinées à une communication entre un dispositif de communication sans fil (101*i*) et au moins un dispositif de communication sans fil voisin (101j), qui est basé sur le mouvement relatif, qui est la vitesse relative, du dispositif de communication sans fil de transmission (101*i*) et dudit au moins un dispositif de communication sans fil de réception (101*j*), par rapport aux dispositifs de communication sans fil transmettant et recevant déjà dans les ressource radio de liaison latérale s.

Fig. 1

Fig. 2

Fig. 3

$$S_j \qquad\qquad C_j$$

| | | |
|---|---|---|
| 01110000100001001011001 → 3 | 2 7 5 6 5 8 4 7 3 3 5 7 7 8 2 1 8 2 7   8 | |
| 10111100100001011001011 → 7 | 5 1 1 8 5 4 2 6 1 6 1 5 1 3 5 6 7 4 4   5 | |
| 00000111000101001110111 → 8 | 8 2 5 1 7 2 2 3 4 8 4 2 2 6 4 6 5 2 1   8 | |
| 01001111001001110011110 → 6 | 3 8 7 6 3 6 6 2 7 2 7 1 3 1 7 7 7 7 4   2 | |
| 10001101100011000101010 → 1 | 3 3 5 4 4 5 4 6 4 5 8 5 8 5 5 7 3 6 5   4 | |
| 01010000010110110010111 → 1 | 3 5 8 6 6 7 2 2 5 3 8 8 8 8 7 2 2 6 2 ··· 1 | |
| 01000011101011000000100 1 → 7 | 7 5 6 8 5 6 1 8 4 3 8 2 8 7 8 8 2 2 1   6 | |
| 00100100110101110010111 0 → 3 | 6 2 2 5 1 2 1 3 1 8 3 3 2 1 6 6 3 1 7   4 | |
| 10100001101010101010 0101 → 8 | 2 1 5 (5) 8 5 2 5 7 8 1 8 7 7 6 7 6 3 5   7 | |
| | 1 6 4 5 7 1 4 7 5 3 1 4 2 3 7 1 6 2 6   1 | |

$N_{subCH}$

⋮  ⋮

11011010011111110111101 → (1)

$N_{PSSCH}$

Indicates that this neighbor UE is in
RSRP value range 1

Indicates that a neighbor UE should be no "further"
than RSRP value range $m=5$ to enjoy the specified SINR
in this resource. If this resource belongs to the set of
receiving resources, it indicates that a neighbor UE
wishing to transmit should be no "closer" than RSRP
value range $m=5$.

Fig. 4

500

**502**
MEASURE A FIRST SIGNAL STRENGTH PARAMETER $P_{ij}$, IN PARTICULAR A PSSCH RSRP, ASSOCIATED WITH AT LEAST ONE NEIGHBORING WIRELESS COMMUNICATION DEVICE $i$

▼

**504**
MEASURE A SECOND SIGNAL STRENGTH PARAMETER $I_j(s)$, IN PARTICULAR AN S-RSSI, ASSOCIATED WITH AT LEAST ONE OF A PLURALITY OF SIDELINK RADIO RESOURCES $s$

▼

**506**
DETERMINE AN INTERFERENCE-RELATED PARAMETER $H_j(s)$, IN PARTICULAR A PSSCH INTERFERENCE HEADROOM, ASSOCIATED WITH AT LEAST ONE OF THE PLURALITY OF SIDELINK RADIO RESOURCES $s$

▼

**508**
COMPUTE A FIRST MAP $S_j$ MAPPING AN IDENTITY-RELATED PARAMETER $ID_i$ OF THE AT LEAST ONE NEIGHBORING WIRELESS COMMUNICATION DEVICE $i$ TO $P_{ij}$ OR A FUNCTION THEREOF

▼

**510**
COMPUTE A SECOND MAP $C_j$ MAPPING AT LEAST ONE SIDELINK RADIO RESOURCE $s$ TO $I_j(s)$ OR $H_j(s)$ OR A FUNCTION THEREOF

▼

**512**
TRANSMIT $S_j$ AND/OR $C_j$ TO A NETWORK ENTITY, IN PARTICULAR A BASE STATION, AND/OR TO AT LEAST ONE NEIGHBORING WIRELESS COMMUNICATION DEVICE

Fig. 5

600

602
RECEIVE, FROM AT LEAST ONE NEIGHBORING WIRELESS COMMUNICATION DEVICE $j$, A MAP $S_j$ MAPPING AN IDENTITY-RELATED PARAMETER $ID_i$ OF THE WIRELESS COMMUNICATION DEVICE $i$ TO A SIGNAL STRENGTH PARAMETER $P_{ij}$, IN PARTICULAR A PSSCH RSRP, OR A FUNCTION THEREOF, AND/OR A MAP $C_j$ MAPPING AT LEAST ONE SIDELINK RADIO RESOURCE $s$ TO A SIGNAL STRENGTH PARAMETER $I_j(s)$, IN PARTICULAR AN S-RSSI, OR AN INTERFERENCE-RELATED PARAMETER $H_j(s)$, IN PARTICULAR A PSSCH INTERFERENCE HEADROOM, OR A FUNCTION THEREOF

▼

604
RECEIVE, FROM AT LEAST ONE NEIGHBORING WIRELESS COMMUNICATION DEVICE $j$, A SET $\mathcal{T}_j$ OF TRANSMITTING SIDELINK RADIO RESOURCES AND/OR A SET $\mathcal{R}_j$ OF RECEIVING SIDELINK RADIO RESOURCES OF THE WIRELESS COMMUNICATION DEVICE $j$

▼

606
SELECT ONE OR MORE SIDELINK RADIO RESOURCES $s$ FROM THE PLURALITY OF SIDELINK RADIO RESOURCES FOR COMMUNICATING WITH THE NEIGHBORING WIRELESS COMMUNICATION DEVICE $j$, OR WITH ANOTHER WIRELESS COMMUNICATION DEVICE $l$, IN PARTICULAR ON THE BASIS OF A COMPARISON BETWEEN $S_j(i)$ AND $C_j(s)$

▼

608
SELECT ONE OR MORE SIDELINK RADIO RESOURCES $s$ FROM THE PLURALITY OF SIDELINK RADIO RESOURCES FOR COMMUNICATING WITH AT LEAST ONE NEIGHBORING WIRELESS COMMUNICATION DEVICE $j$, IN PARTICULAR ON THE BASIS OF THE RELATIVE MOTION, IN PARTICULAR RELATIVE VELOCITY, OF THE TRANSMITTING WIRELESS COMMUNICATION DEVICE $i$ AND/OR THE AT LEAST ONE RECEIVING WIRELESS COMMUNICATION DEVICE $j$, WITH RESPECT TO THE WIRELESS COMMUNICATION DEVICES ALREADY TRANSMITTING AND/OR RECEIVING IN THE SIDELINK RADIO RESOURCE $s$

Fig. 6

EP 3 571 886 B1

*7 7*

700

702
RECEIVE AT A NETWORK ENTITY, FROM A WIRELESS COMMUNICATION DEVICE $j$ OF A PLURALITY OF WIRELESS COMMUNICATION DEVICES, A MAP $S_j$ MAPPING AN IDENTITY-RELATED PARAMETER $ID_i$ OF AT LEAST ONE NEIGHBORING WIRELESS COMMUNICATION DEVICE $i$ OF WIRELESS COMMUNICATION DEVICE $j$ TO A SIGNAL STRENGTH PARAMETER $P_{ij}$, IN PARTICULAR A PSSCH RSRP, OR A FUNCTION THEREOF, AND/OR A MAP $C_j$ MAPPING AT LEAST ONE SIDELINK RADIO RESOURCE $s$ TO A SIGNAL STRENGTH PARAMETER $I_j(s)$, IN PARTICULAR AN S-RSSI, OR AN INTERFERENCE-RELATED PARAMETER $H_j(s)$, IN PARTICULAR A PSSCH INTERFERENCE HEADROOM, OR A FUNCTION THEREOF

▼

704
SELECT AT THE NETWORK ENTITY ONE OR MORE SIDELINK RADIO RESOURCES $s$ FROM THE PLURALITY OF SIDELINK RADIO RESOURCES FOR COMMUNICATION BETWEEN AT LEAST ONE NEIGHBORING WIRELESS COMMUNICATION DEVICE $i$ AND WIRELESS COMMUNICATION DEVICE $j$, OR ANOTHER WIRELESS COMMUNICATION DEVICE $l$, IN PARTICULAR ON THE BASIS OF A COMPARISON BETWEEN $S_j(i)$ AND $C_j(s)$

▼

706
SELECT AT THE NETWORK ENTITY ONE OR MORE SIDELINK RADIO RESOURCES $s$ FROM THE PLURALITY OF SIDELINK RADIO RESOURCES FOR COMMUNICATION BETWEEN A WIRELESS COMMUNICATION DEVICE $i$ AND AT LEAST ONE WIRELESS COMMUNICATION DEVICE $j$, IN PARTICULAR ON THE BASIS OF THE RELATIVE MOTION, IN PARTICULAR RELATIVE VELOCITY, OF THE TRANSMITTING WIRELESS COMMUNICATION DEVICE $i$ AND/OR THE AT LEAST ONE RECEIVING WIRELESS COMMUNICATION DEVICE $j$, WITH RESPECT TO THE WIRELESS COMMUNICATION DEVICES ALREADY TRANSMITTING AND/OR RECEIVING IN THE SIDELINK RADIO RESOURCE $s$

Fig. 7

**EP 3 571 886 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017026977 A1

**Non-patent literature cited in the description**

- Evolved Universal Terrestrial Radio Access (E-UTRA) and Evolved Universal Terrestrial Radio Access Network (E-UTRAN); Overall description; Stage 2 (Release 14). *3GPP TS 36.300,* September 2016

- Evolved Universal Terrestrial Radio Access (E-UTRA); Physical layer procedures (Release 14). *3GPP TS 36.213,* September 2016
- Evolved Universal Terrestrial Radio Access (E-UTRA); Physical layer; Measurements (Release 14). *3GPP TS 36.214,* September 2016